# NEUE EUROPÄISCHE PATENTSCHRIFT

(11) **EP 2 383 111 B2**
(45) Veröffentlichungstag und Bekanntmachung des Hinweises auf die Entscheidung über den Einspruch: **17.05.2017**
(45) Hinweis auf die Patenterteilung: 06.11.2013
(21) Anmeldenummer: 11151779.3
(22) Anmeldetag: 24.01.2011
(51) Int. Cl.: B32B 13/00, E04B 1/74, E04F 13/02, E04F 13/04

(54) **Wärmedämmverbundsystem sowie Verfahren zur Herstellung eines Wärmedämmverbundsystems**
Heat insulation compound system and method for manufacturing same
Système composite d'isolation thermique et procédé de fabrication d'un système composite d'isolation thermique

(30) Priorität: 09.04.2010 DE 102010014478
(43) Veröffentlichungstag der Anmeldung: 02.11.2011
(73) Patentinhaber: STO SE & Co. KGaA, 79780 Stühlingen (DE)
(72) Erfinder: Duttlinger, Werner, 79848, Bonndorf (DE)
(74) Vertreter: Maiwald Patentanwalts GmbH

(56) Entgegenhaltungen:
- WO-A1-2010/031206
- DE-A1- 2 516 916
- DE-A1- 2 915 977
- Guide Weber Maxit 2009
- Allgemeine bauaufsichtliche Zulassung Z-33.43-98 des Deutschen Institut für Bautechnik (08.02.2008)
- FIRMA CAPAROL: 'Farben Lacke Bautenschutz GmbH', August 2009, WDVS HANDBUCH 2009/2010
- PÄTZOLD M. ET AL: 'Grundlagen und Entwicklungen bei Wärmedämmverbundsystemen zur Einführung der EnEV 2009' DETAIL 2009, Seiten 1070 - 1078

## Beschreibung

Die Erfindung betrifft ein Wärmedämmverbundsystem zur Wärmedämmung einer Gebäudeaußenwand mit den Merkmalen des Oberbegriffs des Anspruchs 1. Ferner betrifft die Erfindung ein Verfahren zur Herstellung eines Wärmedämmverbundsystems mit den Merkmalen des Oberbegriffs des Anspruchs 8.

Zur Wärmedämmung von Gebäudeaußenwänden eingesetzte Wärmedämmverbundsysteme sowie Verfahren zu deren Herstellung sind aus dem Stand der Technik seit langem bekannt. Beschreibungen derselben finden sich unter anderem in den Veröffentlichungen des Fachverbands Wärmedämmverbundsysteme (WDVS e.V.).

Ein Wärmedämmverbundsystem umfasst in der Regel eine ein- oder mehrlagige Wärmedämmschicht aus einem Wärmedämmmaterial sowie eine hierauf aufgebrachte Putz- und/oder Deckschicht. Aufgabe der Putz- und/oder Deckschicht ist es, eine witterungsbeständige, optisch ansprechende Oberfläche auszubilden. Dabei gilt es unter anderem die Bildung spannungsbedingter Risse dauerhaft zu vermeiden. Die Putz- und/oder Deckschicht sollte demnach in der Lage sein, die üblicherweise zu Rissen führenden Spannungen aufzunehmen. Derartige Spannungen können beispielsweise nach dem Aufbringen der Putz- und/oder Deckschicht aufgrund von Trocknungs- bzw. Aushärtungsprozessen auftreten, welche ein Schwinden der aushärtenden Schicht gegenüber der Wärmedämmschicht bewirken. Darüber hinaus führen temperaturbedingte Dehnungen einschließlich der sich hieran anschließenden Schwindprozesse ebenfalls zu Spannungen, die es zu kompensieren gilt. Schließlich können auch Bewegungen innerhalb der Wärmedämmschicht Spannungen bewirken und damit die Rissbildung fördern. Dies liegt unter anderem darin begründet, dass die Wärmedämmschicht in der Regel aus einzelnen Wärmedämmplatten besteht, die zwar dicht gestoßen am Untergrund mittels Kleber und/oder mechanischen Befestigungsmitteln befestigt werden, sich dennoch, beispielsweise aufgrund von Formveränderungen, relativ zueinander bewegen können. Derartige Formveränderungen treten beispielsweise aufgrund von Wärmeeinstrahlung oder sonstigen Witterungseinflüssen auf und können zur Spaltbildung im Bereich der Plattenstöße sowie damit einhergehend zur Bildung von Rissen in der auf den Wärmedämmplatten aufgebrachten Putzschicht führen. Insbesondere Wärmedämmplatten aus expandiertem Polystyrol (EPS) neigen zu solchen Formveränderungen. Desweiteren können sich einzelne Wärmedämmplatten auch quer zur Plattenebene verformen, so dass es zu einem Abheben der Wärmedämmplatten vom Untergrund kommt. Aufgrund ihrer hygrothermischen Eigenschaften treten derartige Phänomene insbesondere bei Wärmedämmplatten aus Phenolharz auf. Deshalb sind diese für den Einsatz in einem Wärmedämmverbundsystem nur bedingt geeignet.

Um die vorstehend genannten Probleme zu lösen, sind aus dem Stand der Technik Wärmedämmplatten mit einer Stoßkantenausbildung bekannt, die nach dem Nut- und Federprinzip verlegt werden können. Zum Einen wirkt der Formschluss in Plattenquerrichtung einem Abheben der Platten entgegen, zum Anderen wird eine wärmebrückenausbildende Spaltbildung verhindert. Der Formschluss der Dämmplatten im Stoßkantenbereich allein vermag die vorstehend genannten Probleme jedoch nicht zufriedenstellend zu lösen.

In der EP 1 731 552 A2 wird ein dämmender geschäumter Werkstoff angegeben, der als Platte insbesondere zur Wärmedämmung an Außenfassaden einsetzbar ist. Selbst bei längerer Wärmeeinstrahlung soll dieser Werkstoff nicht zu unkontrollierten irreversiblen thermischen Formveränderungen neigen, so dass damit zugleich einer Rissbildung bei einem darüber aufgebrachten Armierungsputz entgegen gewirkt wird. Der Werkstoff ist hierzu aus pigmententhaltenden und pigmentfreien Styrolpolymerisatpartikel gebildet, wobei ferner die pigmentierten Partikel unregelmäßig im Werkstoff angeordnet sind. Durch die Kombination von pigmentfreien und pigmentierten Styrolpolymerisatpartikel soll ein Werkstoff zur Verfügung stehen, der einerseits eine gute Wärmeleitfähigkeit, wie aus dem Stand der Technik bekannt ist, und andererseits auch unter thermischer Beanspruchung keine oder nur geringfügige Formveränderungen aufweist. Da jedoch selbst Wärmedämmplatten ausschließlich aus pigmentfreien (weißen) Polystyrolpartikeln weiterhin zu Formveränderungen neigen können, kann der vorgeschlagene Werkstoff nicht als Lösung des Problems angesehen werden.

Weitere aus dem Stand der Technik bekannte Maßnahmen zur Vermeidung von Platten- bzw. Fugenabzeichnungen sowie der Bildung unerwünschter Risse sehen die Ausbildung eines mehrschichtigen Putzsystems bestehend aus einem bewehrten Unterputz als Armierungsschicht und einem dekorativen Oberputz vor. Zur Bewehrung des Unterputzes kann in diesen ein Armierungsgewebe eingelegt werden. Ein solches Armierungsgewebe geht beispielsweise aus der EP 0 106 986 A2 hervor. Dennoch können auch in bewehrten Putzsystemen unter Umständen aufgrund von hygrothermisch verursachten Verformungen der Wärmedämmplatten Platten- und/oder Fugenabzeichnungen auftreten.

In der Praxis hat sich zudem gezeigt, dass Platten- bzw. Fugenabzeichnungen bei Wärmedämmverbundsystemen mit einem dickschichtigen Putzaufbau wesentlich seltener auftreten als bei solchen mit einem dünnschichtigen oder mittelstarken Putzaufbau. Denn mit der Schichtstärke nimmt auch die Biegefestigkeit der Putzschicht zu. Daher wurden Wärmedämmplatten aus Phenolharz, die eine besonders ausgeprägte Tendenz zur Plattenverformung haben, bislang meist nur in Verbindung mit dickschichtigen Putzaufbauten verwendet. In der Regel bieten hier nur mineralische Unterputze bzw. Armierungen in einer Schichtstärke von 20 mm oder mehr eine ausreichende Sicherheit gegen Platten- und/oder Fugenabzeichnungen.

Als dickschichtig wird in Anlehnung an den Industrieverband WerkMörtel e.V. im Allgemeinen eine Putzschicht mit einer Schichtstärke > 15 mm bezeichnet. Davon unterscheiden sich mittelstarke (Schichtstärke 5 - 15 mm) sowie dünnschichtige (Schichtstärke < 5 mm) Aufbauten. Mit zunehmender Schichtstärke wird die Applikation einer Putzschicht jedoch nicht nur material-, sondern in der Regel auch arbeitsintensiver. Denn nicht selten muss eine dickschichtige Putzschicht in mehreren Arbeitsgängen nacheinander aufgetragen werden. Insbesondere bei mineralisch gebundenen Putzen ist dabei gerüstlagenweise, das heißt nass in nass, zu arbeiten, so dass der Aufwand zur Ausbildung einer solchen Putzschicht steigt.

Der Erfindung liegt nunmehr die Aufgabe zugrunde, ein Wärmedämmverbundsystem anzugeben, dessen Aufbau eine langfristig optisch ansprechende Oberfläche zu gewährleisten vermag. Insbesondere sollen Platten- bzw. Fugenabzeichnungen sowie die Bildung von Rissen verhindert, zumindest jedoch deutlich gemindert werden. Zudem soll das Wärmedämmverbundsystem einfach und kostengünstig herstellbar sein.

Zur Lösung der Aufgabe wird ein Wärmedämmverbundsystem mit den Merkmalen des Anspruchs 1 sowie ein Verfahren zur Herstellung eines Wärmedämmverbundsystems mit den Merkmalen des Anspruchs 8 angegeben. Vorteilhafte Weiterbildungen des Systems bzw. Verfahrens sind den jeweils auf Anspruch 1 bzw. Anspruch 8 rückbezogenen Unteransprüchen zu entnehmen.

Das vorgeschlagene Wärmedämmverbundsystem weist eine ein- oder mehrlagige Wärmedämmschicht aus einem Wärmedämmmaterial sowie einen auf der Wärmedämmschicht aufgebrachten mehrschichtigen Unterputzaufbau zur Aufnahme eines Oberputzes und/oder einer Deckschicht auf. Erfindungsgemäß umfasst der Unterputzaufbau wenigstens eine erste, bauwerksnahe Schicht aus einer Beschichtungsmasse basierend auf einem mineralischen Bindemittel und wenigstens eine weitere, bauwerksferne Schicht aus einer Beschichtungsmasse basierend auf einem organischen Bindemittel, wobei die erste Schicht stärker als die weitere Schicht ausgebildet ist und die Gesamtstärke d_{G} des Unterputzaufbaus 15 mm oder weniger beträgt.

Gemäß den eingangs genannten Kriterien ist der mehrschichtige Unterputzaufbau aufgrund der angegebenen maximalen Gesamtstärke als mittelstarker Aufbau zu klassifizieren. Demnach sind die Einzelschichten, aus denen sich der Unterputzaufbau zusammensetzt, ebenfalls dünnschichtig und/oder mittelstark ausgeführt. Die Applikation der einzelnen Unterputzschichten kann somit in handwerklich einfacher Weise und damit zeit- und kostensparend vorgenommen werden. Ferner wird im Vergleich zu dickschichtigen Unterputzaufbauten Material eingespart.

Durch Aufbringen einer ersten, mineralisch gebundenen Putzschicht und wenigstens einer weiteren, organisch gebundenen Putzschicht wird zudem ein mehrschichtiger Unterputzaufbau erzielt, der Fugen- und/oder Dübelabzeichnungen auf der Fassadenoberfläche zu verhindern vermag. Dies liegt vermutlich darin begründet, dass die erfindungsgemäß vorgesehene erste Schicht stärker als die darauffolgende weitere Schicht ausgebildet ist und demnach massebedingt eine bessere Wärmespeicherfähigkeit aufweist, so dass durch die erste Schicht eine gleichmäßige Temperaturverteilung sicher gestellt ist. Die erste Schicht übernimmt somit die Funktion einer Wärmeverteilungsschicht, die darüber hinaus eine Verminderung der Besiedlung der Fassadenoberfläche mit Mikroorganismen wie beispielsweise Algen und Pilze bewirkt. Die Verwendung unterschiedlicher Beschichtungsmassen zur Ausbildung der einzelnen Schichten des Unterputzaufbaus hat des Weiteren zur Folge, dass etwaige spannungsbedingte Risse oder sonstige Beschädigungen der relativ spröden ersten Schicht, die insbesondere durch Bewegungen und/oder Formveränderungen der darunter liegenden Wärmedämmplatten verursacht worden sein können, durch die wenigstens eine weitere Schicht ausgeglichen werden. Denn die wenigstens eine weitere Schicht erweist sich aufgrund ihrer Zusammensetzung und der geringeren Schichtstärke als weniger spröde. Dadurch bleibt die wenigstens eine weitere, bauwerksferne Schicht des Unterputzaufbaus selbst bei starker Beanspruchung intakt.

Gegenüber einer einzigen dünnschichtigen Unterputzschicht aus einer organisch gebundenen Beschichtungsmasse weist der erfindungsgemäße mehrschichtige Unterputzaufbau ferner den Vorteil auf, dass bereits aufgrund der größeren Schichtstärke ein Abzeichnen mechanischer Befestigungsmittel, insbesondere von Dübeln, wirksam verhindert wird. Die Teller der Dübel werden nicht mehr einfach durch die dünnschichtige organische Putzschicht "durchgepaust".

Überraschenderweise ist die beobachtete Verminderung von Dübel-, Platten- und/oder Fugenabzeichnungen auch erfahrbar bei mehrschichtigen Unterputzaufbauten in einer Gesamtstärke von weniger als 15 mm, welche jedoch einschichtig ausgeführt Abzeichnungen und Risse nicht sicher zu verhindern vermögen. Man erlangt folglich mit einem mittelstarken mehrschichtigen Unterputzaufbau eine Sicherheit gegen Platten- und/oder Fugenabzeichnungen wie man sie üblicherweise nur mit einem dickschichtigen mineralischen Unterputzaufbau mit einer Schichtstärke von wenigstens 20 mm erzielt.

Zur Ausbildung einer Armierungsschicht ist bevorzugt in die erste Schicht und/oder in die wenigstens eine weitere Schicht ein Armierungsgewebe eingelegt. Das heißt, dass wenigstens eine Schicht des mehrschichtigen Unterputzaufbaus zusätzlich bewehrt ist. Da insbesondere die weitere, bauwerksferne Schicht intakt bleiben soll, um ein Fortsetzen etwaiger bereits vorhandener Risse bis in den Oberputz zu verhindern, ist das Armierungsgewebe vorzugsweise in die den Oberputz aufnehmende weitere Schicht eingelegt. Alternativ oder ergänzend kann auch in die erste Schicht ein Armierungsgewebe zur Ausbildung einer Armierungsschichteingelegt sein.

Weiterhin bevorzugt ist die erste Schicht aus einer Beschichtungsmasse hergestellt, die zum Beispiel Zement, Wasserglas und/oder Kalkhydrat als mineralisches Bindemittel aufweist. Die wenigstens eine weitere Schicht ist vorzugsweise aus einer Beschichtungsmasse hergestellt, die zum Beispiel Polymerdispersionen und/oder organofunktionelle Siliziumverbindungen als organisches Bindemittel aufweist.

Um eine Gesamtstärke des Unterputzaufbaus von maximal 15 mm zu erhalten, beträgt die Schichtstärke d₁ der ersten Schicht 12 mm oder weniger, vorzugsweise 10 mm oder weniger, weiterhin vorzugsweise 8 mm oder weniger. Die Schichtstärke d₂ der wenigstens einen weiteren Schicht beträgt demgegenüber vorzugsweise 5 mm oder weniger, weiterhin vorzugsweise 3 mm oder weniger.

Des Weiteren bevorzugt besitzt die wenigstens eine weitere Schicht eine geringere Biegesteifigkeit als die erste Schicht. Dadurch ist die wenigstens eine weitere Schicht in der Lage, Spannungen zu kompensieren und ggf. bereits vorhandene Risse der darunter liegenden Schicht zu überbrücken. Da organisch gebundene Putzschichten in der Regel weniger spröde als mineralisch gebundene Putzschichten sind, kommt die erfindungsgemäß vorgesehene Zusammensetzung des Unterputzaufbaus den an die weitere Schicht gestellten Anforderungen entgegen.

Erfindungsgemäß umfasst die ein- oder mehrlagige Wärmedämmschicht ein plattenförmiges Wärmedämmmaterial, das aus einem Phenolharz- oder Polyurethan-Schaumkunststoff besteht. Diese Wärmedämmmaterialien zeichnen sich durch eine geringe Wärmeleitfähigkeit und damit durch hervorragende Wärmedämmeigenschaften aus. Wie eingangs bereits beschrieben, neigen insbesondere Phenolharzplatten zu irreversiblen Formveränderungen, die es durch einen hierauf aufgebrachten Putzaufbau zu kompensieren gilt. Insoweit kommen die Vorteile des erfindungsgemäßen Systems insbesondere bei Einsatz derartiger Wärmedämmmaterialen zum Tragen.

Unabhängig vom jeweils verwendeten Wärmedämmmaterial, finden vorzugsweise Dämmplatten Einsatz, deren Stoßkantenausbildung eine Verlegung der Platten nach dem Nut- und Federprinzip ermöglichen. Denn der über das Nut- und Federprinzip bewirkte Formschluss der Dämmplatten im Stoßkantenbereich trägt zu einer planebenen Verlegung der Dämmplatten bei. Die Stoßkanten der Wärmedämmplatten können beispielsweise mit einem Stufenfalz versehen sein.

Vorteilhafterweise ist auf den Unterputzaufbau eine weitere als Oberputz dienende Putzschicht und/oder eine Deckbeschichtung aufgebracht. Als Oberputz oder Deckbeschichtung können alle herkömmlichen Deckputze verwendet werden, soweit sie mit dem Unterputz verträglich sind. Gegebenenfalls ist vor Aufbringen des Oberputzes bzw. der Deckbeschichtung der Untergrund mit entsprechenden Grundierungspräparaten vorzubehandeln. Als dekorative Deckbeschichtung kann beispielsweise ein Farbanstrich auf den Oberputz aufgebracht werden.

Das zur Lösung der Aufgabe ebenfalls vorgeschlagene erfindungsgemäße Verfahren zur Herstellung eines Wärmedämmverbundsystems zeichnet sich analog dadurch aus, dass zur Ausbildung eines mehrschichtigen Unterputzaufbaus zunächst eine erste Schicht auf die Wärmedämmschicht aufgetragen wird, die aus einer Beschichtungsmasse basierend auf einem mineralischen Bindemittel besteht. Hierauf wird wenigstens eine weitere Schicht aufgebracht, die aus einer Beschichtungsmasse basierend auf einem organischen Bindemittel besteht. Dabei wird die erste Schicht stärker als die weitere Schicht ausgebildet und der Unterputzaufbau erreicht eine Gesamtstärke d_{G}, die 15 mm oder weniger beträgt.

Des Weiteren kann die Ausbildung wenigstens einer Armierungsschicht vorgesehen sein. Vorzugsweise wird hierzu in die erste Schicht und/oder in die wenigstes eine weitere Schicht ein Armierungsgewebe eingelegt.

Zur Herstellung der ersten Schicht wird vorzugsweise eine Beschichtungsmasse verwendet, die zum Beispiel Zement, Wasserglas und/oder Kalkhydrat als mineralisches Bindemittel aufweist. Die Herstellung der wenigstens einen weiteren Schicht erfolgt vorzugsweise unter Verwendung einer Beschichtungsmasse, die zum Beispiel Polymerdispersionen und/oder organofunktionelle Siliziumverbindungen als organisches Bindemittel aufweist.

Um die maximale Gesamtstärke von 15 mm nicht zu überschreiten, wird die erste Schicht vorzugsweise in einer Schichtstärke d₁ ausgebildet, die 12 mm oder weniger, 10 mm oder weniger, oder 8 mm oder weniger beträgt. Die wenigstens eine weitere Schicht wird demgegenüber bevorzugt in einer Schichtstärke d₂ ausgebildet, die 5 mm oder weniger, oder 3 mm oder weniger beträgt.

Zur Ausbildung der Wärmedämmschicht wird ein plattenförmiges Wärmedämmmaterial aus Phenolharz- oder Polyurethan-Schaumkunststoff verwendet. Die Anbringung der Wärmedämmschicht an der Gebäudeaußenwand erfolgt vorzugsweise mittels eines Klebers und/oder mittels mechanischer Befestigungsmittel, insbesondere Dübel. Durch Einsatz zusätzlicher mechanischer Befestigungsmittel können temperaturbedingte Bewegungen und/oder Formveränderungen der Wärmedämmplatten bereits wirksam eingeschränkt werden. Als vorteilhaft erweist sich in diesem Zusammenhang auch eine Verlegung der Wärmedämmplatten nach dem Nut- und Federprinzip.

Schließlich wird auf den Unterputzaufbau eine weitere als Oberputz dienende Putzschicht und/oder eine Deckbeschichtung aufgebracht.

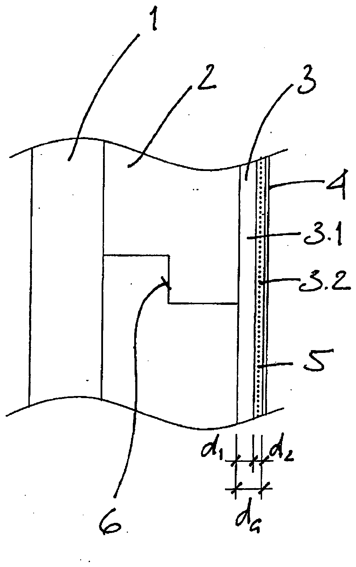

Eine bevorzugte Ausführungsform eines erfindungsgemäßen Wärmedämmverbundsystems wird nachfolgend anhand der beigefügten Zeichnung näher beschrieben. Diese zeigt in einem Systemquerschnitt den Aufbau eines solchen Wärmedämmverbundsystems.

Der dargestellte Aufbau beginnt auf der linken Zeichnungsseite mit einer Gebäudeaußenwand 1, welche es zu dämmen gilt. Die Gebäudeaußenwand 1 ist nur schematisch dargestellt und demnach nicht maßstäblich. Hierbei kann es sich um eine Wand aus Mauersteinen und/oder Beton sowie um eine in Skelettbauweise errichtete Wand aus Holz, Metall oder Stahlbeton handeln, die außenseitig mit einer Trägerplatte zur Aufnahme des Wärmedämmverbundsystems versehen ist.

Auf die Gebäudeaußenwand 1 ist zunächst eine Wärmedämmschicht 2 aufgebacht, die vorliegend aus eine Lage eines plattenförmigen Wärmedämmmaterials gebildet wird. Die Wärmedämmplatten sind im Bereich ihrer Stoßkanten mit einem Stufenfalz 6 versehen, welcher eine Verlegung der Platten nach dem Nut- und Federprinzip ermöglicht. Der Stufenfalz verhindert eine sich durch die gesamte Wärmedämmschicht 2 erstreckende Fugenausbildung, die beispielsweise durch Plattenbewegungen bedingt sein kann. Wärmebrücken werden somit wirksam verhindert. Zudem wirkt der Formschluss im Bereich des Plattenstoßes einer Verformung der Platten quer zur Plattenebene entgegen.

Auf die Wärmedämmschicht 2 folgt ein mehrschichtiger Unterputzaufbau 3, der vorliegend aus einer ersten Schicht 3.1 und einer weiteren Schicht 3.2 besteht. In die weitere Schicht 3.2 ist zur Ausbildung einer Armierungsschicht ein Armierungsgewebe 5 eingelegt. Zudem ist die weitere Schicht 3.2 dünner als die erste Schicht 3.1 ausgeführt. Das heißt, dass die Schichtstärke d₂ der weiteren Schicht 3.2 geringer als die Schichtstärke d₁ der ersten Schicht 3.1 ist. Die beiden Einzelschichten bilden zusammen den Unterputzaufbau 3 mit der Gesamtstärke d_{G} aus.

Darüber hinaus weisen die Schichten 3.1 und 3.2 eine unterschiedliche Zusammensetzung auf. Die erste Schicht 3.1 ist aus einer mineralisch gebundenen Beschichtungsmasse hergestellt, während die weitere Schicht 3.2 aus einer organisch gebunden Beschichtungsmasse hergestellt ist. Durch die Zusammensetzung und die Schichtstärke ist sichergestellt, dass die weitere Schicht 3.2 im Vergleich zur ersten Schicht 3.1 derart elastisch ist, dass sie bereits in der ersten Schicht 3.1 vorhandene Risse zu überbrücken bzw. Spannungen zu kompensieren vermag. Um auch die erste Schicht als Armierungsschicht auszubilden, kann auch die erste Schicht 3.1 durch Einlegen eines Armierungsgewebes bewehrt sein.

Den Abschluss des dargestellten Aufbaus bildet eine als Oberputz 4 ausgebildete Putzschicht bzw. Deckschicht. Diese kann eingefärbt und/oder nachträglich mit einem Farbanstrich als Deckbeschichtung versehen sein, um der Oberfläche eine optisch ansprechende Gestaltung zu verleihen. Die Oberfläche der als Oberputz 4 dienenden Putzschicht kann aus gleichem Grund darüber hinaus strukturiert sein.

## Patentansprüche

1. Wärmedämmverbundsystem zur Wärmedämmung einer Gebäudeaußenwand (1) mit einer ein- oder mehrlagigen Wärmedämmschicht (2) aus einem Wärmedämmmaterial sowie einem auf der Wärmedämmschicht (2) aufgebrachten mehrschichtigen Unterputzaufbau (3) zur Aufnahme eines Oberputzes (4) und/oder einer Deckschicht,
**dadurch gekennzeichnet, dass**
die ein- oder mehrlagige Wärmedämmschicht (2) ein plattenförmiges Wärmedämmmaterial umfasst, das aus einem Phenolharz- oder Polyurethan-Schaumkunststoff besteht, und der Unterputzaufbau (3) wenigstens eine erste, bauwerksnahe Schicht (3.1) aus einer Beschichtungsmasse basierend auf einem mineralischen Bindemittel und wenigstens eine weitere, bauwerksferne Schicht (3.2) aus einer Beschichtungsmasse basierend auf einem organischen Bindemittel umfasst, wobei die erste Schicht (3.1) stärker als die weitere Schicht (3.2) ausgebildet ist und die Gesamtstärke d_{G} des Unterputzaufbaus (3) 15 mm oder weniger beträgt.

2. Wärmedämmverbundsystem nach Anspruch 1,
**dadurch gekennzeichnet, dass** in die erste Schicht (3.1) und/oder in die wenigstens eine weitere Schicht (3.2) ein Armierungsgewebe (5) zur Ausbildung einer Armierungsschicht eingelegt ist.

3. Wärmedämmverbundsystem nach Anspruch 1 oder 2,
**dadurch gekennzeichnet, dass** die erste Schicht (3.1) aus einer Beschichtungsmasse hergestellt ist, die zum Beispiel Zement, Wasserglas und/oder Kalkhydrat als mineralisches Bindemittel aufweist, und/oder die wenigstens eine weitere Schicht (3.2) aus einer Beschichtungsmasse hergestellt ist, die zum Beispiel Polymerdispersionen und/oder organofunktionelle Siliziumverbindungen als organisches Bindemittel aufweist.

4. Wärmedämmverbundsystem nach einem der vorhergehenden Ansprüche,
**dadurch gekennzeichnet, dass** die Schichtstärke d₁ der ersten Schicht (3.1) 12 mm oder weniger, vorzugsweise 10 mm oder weniger, weiterhin vorzugsweise 8 mm oder weniger beträgt.

5. Wärmedämmverbundsystem nach einem der vorhergehenden Ansprüche,
**dadurch gekennzeichnet, dass** die Schichtstärke d₂ der wenigstens einen weiteren Schicht (3.2) 5 mm oder weniger, vorzugsweise 3 mm oder weniger beträgt.

6. Wärmedämmverbundsystem nach einem der vorhergehenden Ansprüche,
**dadurch gekennzeichnet, dass** die wenigstens eine weitere Schicht (3.2) eine geringere Biegesteifigkeit als die erste Schicht (3.1) besitzt.

7. Wärmedämmverbundsystem nach einem der vorhergehenden Ansprüche,
**dadurch gekennzeichnet, dass** auf den Unterputzaufbau (3) eine weitere als Oberputz (4) dienende Putzschicht und/oder eine Deckbeschichtung aufgebracht ist.

8. Verfahren zur Herstellung eines Wärmedämmverbundsystems zur Wärmedämmung einer Gebäudeaußenwand (1), wobei zunächst eine ein- oder mehrlagige Wärmedämmschicht (2) aus einem Wärmedämmmaterial und hierauf ein mehrschichtiger Unterputzaufbau (3) auf die Gebäudeaußenwand (1) aufgebracht werden,
**dadurch gekennzeichnet, dass** zur Ausbildung der Wärmedämmschicht (2) ein plattenförmiges Wärmedämmmaterial aus einem Phenolharz- oder Polyurethan-Schaumkunststoff verwendet wird und zur Ausbildung des mehrschichtigen Unterputzaufbaus (3) zunächst eine erste Schicht (3.1) auf die Wärmedämmschicht (2) aufgetragen wird, die aus einer Beschichtungsmasse basierend auf einem mineralischen Bindemittel besteht, und auf die erste Schicht (3.2) wenigstens eine weitere Schicht (3.2) aufgebracht wird, die aus einer Beschichtungsmasse basierend auf einem organischen Bindemittel besteht, wobei die erste Schicht (3.1) stärker als die weitere Schicht (3.2) ausgebildet wird und eine Gesamtstärke d_{G} des Unterputzaufbaus (3) erreicht wird, die 15 mm oder weniger beträgt.

9. Verfahren nach Anspruch 8,
**dadurch gekennzeichnet, dass** in die erste Schicht (3.1) und/oder in die wenigstens eine weitere Schicht (3.2) ein Armierungsgewebe (5) zur Ausbildung einer Armierungsschicht eingelegt wird.

10. Verfahren nach Anspruch 8 oder 9,
**dadurch gekennzeichnet, dass** die erste Schicht (3.1) aus einer Beschichtungsmasse hergestellt wird, die zum Beispiel Zement, Wasserglas und/oder Kalkhydrat als mineralisches Bindemittel aufweist, und/oder die wenigstens eine weitere Schicht (3.2) aus einer Beschichtungsmasse hergestellt wird, die zum Beispiel Polymerdispersionen und/oder organofunktionelle Siliziumverbindungen als organisches Bindemittel aufweist.

11. Verfahren nach einem der Ansprüche 8 bis 10,
**dadurch gekennzeichnet, dass** die erste Schicht (3.1) in einer Schichtstärke d₁ ausgebildet wird, die 12 mm oder weniger, vorzugsweise 10 mm oder weniger, weiterhin vorzugsweise 8 mm oder weniger, beträgt.

12. Verfahren nach einem der Ansprüche 8 bis 11,
**dadurch gekennzeichnet, dass** die wenigstens eine weitere Schicht (3.2) in einer Schichtstärke d₂ ausgebildet wird, die 5 mm oder weniger, vorzugsweise 3 mm oder weniger, beträgt.

13. Verfahren nach einem der Ansprüche 8 bis 12,
**dadurch gekennzeichnet, dass** die Anbringung der Wärmedämmschicht (2) an der Gebäudeaußenwand (1) mittels eines Klebers und/oder mittels mechanischer Befestigungsmittel, insbesondere Dübel, erfolgt.

14. Verfahren nach einem der Ansprüche 8 bis 13,
**dadurch gekennzeichnet, dass** auf den Unterputzaufbau (3) eine weitere als Oberputz (4) dienende Putzschicht und/oder eine Deckbeschichtung aufgebracht wird.

## Claims

1. A thermal insulation composite system for the thermal insulation of a building outer wall (1), having a single- or multi-layered thermal insulation layer (2) consisting of a thermal insulation material and a multi-layered plaster undercoat structure (3) applied to the thermal insulation layer (2), for receiving a plaster finishing coat (4) and/or a top layer,
**characterised in that**
the single- or multi-layered thermal insulation layer (2) comprises a plate-shaped thermal insulation material which consists of a foamed phenolic resin or a foamed polyurethane, and the plaster undercoat structure (3) comprises at least one first layer (3.1) close to the building, consisting of a coating mass based on a mineral binder, and at least one further layer (3.2) away from the building, consisting of a coating mass based on an organic binder, wherein the first layer (3.1) is thicker than the further layer (3.2), and the total thickness d_{G} of the plaster undercoat structure (3) is 15 mm or less.

2. The thermal insulation composite system according to Claim 1,
**characterised in that** a reinforcement fabric (5) for forming a reinforcement layer is placed into the first layer (3.1) and/or into the at least one further layer (3.2).

3. The thermal insulation composite system according to Claim 1 or 2,
**characterised in that** the first layer (3.1) is produced from a coating mass which has for example cement, water glass and/or hydrated lime as a mineral binder, and/or the at least one further layer (3.2) is produced from a coating mass which has for example polymer dispersions and/or organofunctional silicon compounds as the organic binder.

4. The thermal insulation composite system according to any one of the preceding claims,
**characterised in that** the layer thickness d₁ of the first layer (3.1) is 12 mm or less, preferably 10 mm or less, further preferably 8 mm or less.

5. The thermal insulation composite system according to any one of the preceding claims,
**characterised in that** the layer thickness d₂ of the at least one further layer (3.2) is 5 mm or less, preferably 3 mm or less.

6. The thermal insulation composite system according to any one of the preceding claims,
**characterised in that** the at least one further layer (3.2) has a lower flexural strength than the first layer (3.1).

7. The thermal insulation composite system according to any one of the preceding claims,
**characterised in that** a further plaster layer and/or a top coating which acts as a plaster finishing coat (4) is applied to the plaster undercoat structure (3).

8. A method for producing a thermal insulation composite system for the thermal insulation of a building outer wall (1), wherein first a single- or multi-layered thermal insulation layer (2) consisting of a thermal insulation material and then a multi-layered plaster undercoat structure (3) are applied to the building outer wall (1),
**characterised in that**
to form the thermal insulation layer (2) a plate-shaped thermal insulation material of a foamed phenolic resin or a foamed polyurethane is used, and to form the multi-layered plaster undercoat structure (3), first a first layer (3.1) is applied to the thermal insulation layer (2), which consists of a coating mass based on a mineral binder, and at least one further layer (3.2) is applied to the first layer (3.1), which further layer consists of a coating mass based on an organic binder, wherein the first layer (3.1) is thicker than the further layer (3.2) and a total thickness d_{G} of the plaster undercoat structure (3) is achieved which is 15 mm or less.

9. The method according to Claim 8,
**characterised in that** a reinforcement fabric (5) for forming a reinforcement layer is placed into the first layer (3.1) and/or into the at least one further layer (3.2).

10. The method according to Claim 8 or 9,
**characterised in that** the first layer (3.1) is produced from a coating mass which has for example cement, water glass and/or hydrated lime as a mineral binder, and/or the at least one further layer (3.2) is produced from a coating mass which has for example polymer dispersions and/or organofunctional silicon compounds as the organic binder.

11. The method according to any one of Claims 8 to 10,
**characterised in that** the first layer (3.1) is formed in a layer thickness d₁ which is 12 mm or less, preferably 10 mm or less, further preferably 8 mm or less.

12. The method according to any one of Claims 8 to 11,
**characterised in that** the at least one further layer (3.2) is formed in a layer thickness d₂ which is 5 mm or less, preferably 3 mm or less.

13. The method according to any one of Claims 8 to 12,
**characterised in that** the thermal insulation layer (2) is applied to the building outer wall (1) by means of an adhesive and/or by means of mechanical fastening means, in particular dowels.

14. The method according to any one of Claims 8 to 13, **characterised in that** a further plaster layer and/or a top coating which acts as a plaster finishing coat (4) is applied to the plaster undercoat structure (3).

## Revendications

1. Système composite d'isolation thermique pour l'isolation thermique d'un mur extérieur de bâtiment (1) avec une couche d'isolation thermique (2) à une ou plusieurs épaisseurs, constituée d'un matériau d'isolation thermique ainsi qu'une structure encastrée (3) multicouches appliquée sur la couche d'isolation thermique (2), pour la réception d'un enduit de finition (4) et/ou d'une couche de revêtement,
**caractérisé en ce que**
la couche d'isolation thermique (2) à une ou plusieurs épaisseurs inclut un matériau d'isolation thermique en forme de plaque, constitué d'une mousse synthétique de résine phénolique ou de polyuréthane, et la structure encastrée (3) comprend au moins une première couche (3.1) proche de la construction, constituée d'une masse de revêtement à base d'un agent liant minéral, et au moins une autre couche (3.2) éloignée de la construction, constituée d'une masse de revêtement à base d'un agent liant organique, dans lequel la première couche (3.1) est réalisée plus épaisse que l'autre couche (3.2) et l'épaisseur totale dG de la structure encastrée (3) s'élève à 15 mm ou moins.

2. Système composite d'isolation thermique selon la revendication 1,
**caractérisé en ce qu'**un treillis d'armature (5) est intégré dans la première couche (3.1) et/ou dans ladite au moins une autre couche (3.2), pour former une couche d'armature.

3. Système composite d'isolation thermique selon la revendication 1 ou 2,
**caractérisé en ce que** la première couche (3.1) est fabriquée à partir d'une masse de revêtement comportant par exemple du ciment, du verre soluble et/ou de la chaux hydratée en tant qu'agent liant minéral, et/ou ladite au moins une autre couche (3.2) est fabriquée à partir d'une masse de revêtement comportant par exemple une dispersion polymère et/ou un composé de silicium organo-fonctionnel en tant qu'agent liant organique.

4. Système composite d'isolation thermique selon l'une des revendications précédentes,
**caractérisé en ce que** l'épaisseur de couche d1 de la première couche (3.1) s'élève à 12 mm ou moins, de préférence 10 mm ou moins, et de façon encore plus préférée 8 mm ou moins.

5. Système composite d'isolation thermique selon l'une des revendications précédentes,
**caractérisé en ce que** l'épaisseur de couche d2 de ladite au moins une autre couche (3.2) s'élève à 5 mm ou moins, de préférence 3 mm ou moins.

6. Système composite d'isolation thermique selon l'une des revendications précédentes,
**caractérisé en ce que** ladite au moins une autre couche (3.2) possède une rigidité à la flexion inférieure à celle de la première couche (3.1).

7. Système composite d'isolation thermique selon l'une des revendications précédentes,
**caractérisé en ce qu'**une autre couche d'enduit et/ou couche de revêtement servant d'enduit de finition (4) est appliquée sur la structure encastrée (3).

8. Procédé pour la fabrication d'un système composite d'isolation thermique pour l'isolation thermique d'un mur extérieur de bâtiment (1), dans lequel, sur le mur extérieur de bâtiment (1), sont appliquées tout d'abord une couche d'isolation thermique (2) à une ou plusieurs couches, constituée d'un matériau d'isolation thermique, et sur celle-ci une structure encastrée (3) multicouches,
**caractérisé en ce qu'**un matériau d'isolation thermique en forme de plaque, constitué d'une mousse synthétique de résine phénolique ou de polyuréthane, est utilisé pour réaliser la couche d'isolation thermique (2) et pour réaliser la structure encastrée (3) multicouches, une première couche (3.1) constituée d'une masse de revêtement à base d'un agent liant minéral est tout d'abord appliquée sur la couche d'isolation thermique (2), puis au moins une autre couche (3.2) constituée d'une masse de revêtement à base d'agent liant organique est appliquée sur la première couche (3.2), dans lequel la première couche (3.1) est réalisée plus épaisse que l'autre couche (3.2), et l'épaisseur totale dG de la structure encastrée (3) s'élève à 15 mm ou moins.

9. Procédé selon la revendication 8,
**caractérisé en ce qu'**un treillis d'armature (5) est intégré dans la première couche (3.1) et/ou dans ladite au moins une autre couche (3.2), pour former une couche d'armature.

10. Procédé selon la revendication 8 ou 9,
**caractérisé en ce que** la première couche (3.1) est fabriquée à partir d'une masse de revêtement comportant par exemple du ciment, du verre soluble et/ou de la chaux hydratée en tant qu'agent liant minéral, et/ou ladite au moins une autre couche (3.2) est fabriquée à partir d'une masse de revêtement comportant par exemple des dispersions polymères et/ou des composés de silicium organo-fonctionnel en tant qu'agent liant organique.

11. Procédé selon l'une des revendications 8 à 10,
**caractérisé en ce que** la première couche (3.1) est réalisée dans une épaisseur de couche d1 de 12 mm ou moins, de préférence 10 mm ou moins, et de façon encore plus préférée 8 mm ou moins.

12. Procédé selon l'une des revendications 8 à 11,
**caractérisé en ce que** ladite au moins une autre couche (3.2) est réalisée dans une épaisseur de couche d2 de 5 mm ou moins, de préférence 3 mm ou moins.

13. Procédé selon l'une des revendications 10 à 16,
**caractérisé en ce que** l'application de la couche d'isolation thermique (2) sur le mur extérieur de bâtiment (1) est effectuée à l'aide d'une colle et/ou d'un moyen de fixation mécanique, en particulier des chevilles.

14. Procédé selon l'une des revendications 8 à 13,
**caractérisé en ce qu'**une autre couche d'enduit servant de couche de finition (4) et/ou une couche de revêtement est appliquée sur la structure encastrée (3).
